# EUROPÄISCHE PATENTSCHRIFT

(11) **EP 2 186 454 B1**
(45) Veröffentlichungstag und Bekanntmachung des Hinweises auf die Patenterteilung: **14.12.2011**
(21) Anmeldenummer: 09173939.1
(22) Anmeldetag: 23.10.2009
(51) Int. Cl.: A47J 31/44, A47J 31/46

(54) **Kaffeeautomat**
Coffee machine
Automate à café

(30) Priorität: 07.11.2008 DE 102008043572
(43) Veröffentlichungstag der Anmeldung: 19.05.2010
(73) Patentinhaber: BSH Bosch und Siemens Hausgeräte GmbH, 81739 München (DE)
(72) Erfinder: Konopka, Stefanie, 83278, Traunstein (DE); Magg, Johann, 83368, St. Georgen (DE); Utz, Christian, 83417, Kirchanschöring (DE)

(56) Entgegenhaltungen:
- US-A- 5 490 447

## Beschreibung

Die vorliegende Erfindung betrifft einen Kaffeeautomaten zur Ausgabe von Kaffee, Milch und/oder Milchschaum, gemäß dem Oberbegriff des Anspruchs 1.

Aus der EP 0 820 715 A1 ist ein gattungsgemäßer Kaffeeautomat bekannt, der einen Kaffeeauslauf und einen separat dazu angeordneten Milchauslauf aufweist. Der Kaffeeauslauf und der Milchauslauf sind dabei konstruktiv zu einer Auslasseinheit zusammengefasst, um insbesondere deren Reinigung zu erleichtern. Ein Abstand zwischen dem Milchauslass und dem Kaffeeauslass ist dabei so gewählt, dass alternativ entweder zwei Tassen bequem untergestellt und gemeinsam, jeweils eine Tasse aus einem Auslauf, befüllt werden kann, wobei der Abstand zudem kleiner ist als der Durchmesser einer üblichen Kaffeetasse, so dass auch eine einzige Tasse aus beiden Ausläufen gemeinsam befüllt werden kann.

Aus der DE 20 2004 014 061 U1 ist eine Getränkezubereitungsmaschine mit einem zwei Ausläufe umfassenden Doppelauslauf bekannt. Zusätzlich ist ein zwei Austrittsöffnungen umfassendes Teilungselement zum Teilen des bereiteten, auszugebenden Getränkestromes in zwei Teilströme vorgesehen, wobei jeder Auslauf des Doppelauslaufes mit seiner Eintrittsöffnung einer Austrittsöffnung des Teilungselementes zugeordnet ist.

Aus der DE 81 18 293 U1 ist ein Ablaufkanal für den bereiteten Kaffee einer Espressomaschine bekannt, der zu zwei Ausläufen führt, deren Eingang eine Querwand den Kaffee auf die zwei Ausläufe aufteilt. Um den aufbereiteten Espresso möglichst gleichmäßig auf die beiden Ausläufe verteilen zu können und dabei den bei der Kaffeebereitung gebildeten Schaum weitgehend ungehindert mit ausfließen zu lassen, bilden die Seitenwände des Ablaufkanals im Bereich der Querwände eine Engstelle.

Schließlich ist aus der DE 35 41 752 A1 eine Vorrichtung zum Dosieren von Flüssigkeiten bekannt. Bei dieser ist für eine genaue Dosierung mit geringem Aufwand das den Durchfluss von einem Vorratsbehälter bestimmende Magnetventil mit einem Dosierbehälter verbunden, dessen Zulaufquerschnitt größer als der Auslaufquerschnitt ist, wobei darüber hinaus im Dosierbehälter Füllstandselektroden angebracht sind.

Die vorliegende Erfindung beschäftigt sich mit dem Problem, eine verbesserte Ausführungsform eines gattungsgemäßen Kaffeeautomatens anzugeben, welche eine erhöhte Flexibilität und ein vereinfachtes Handling erlaubt.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, bei einem Kaffeeautomaten mit zumindest einem Kaffeezuführkanal und einem Milch-/Milchschaumzuführkanal zwei Auslässe vorzusehen, wobei jedem dieser Auslässe ein Kaffeezuführkanal zugeordnet ist, so dass insgesamt zwei Kaffeezuführkanäle vorgesehen werden, sowie eine Kanalgabel mit zwei Teilkanälen, die den einen Milch-/Milchschaumzuführkanal mit den beiden Auslässen kommunizierend verbindet. Die beiden Auslässe weisen dabei einen Abstand zueinander auf, der derart gewählt ist, dass alternativ ein gemeinsames Befüllen von zwei separaten Getränkebehältern oder lediglich das Befüllen eines einzigen Getränkebehälters möglich ist. Durch die erfindungsgemäß vorgesehene Kanalgabel ist es möglich, einen aus dem Milch-/Milchschaumzuführkanal austretenden Fluidstrom, also beispielsweise Milch oder Milchschaum, gleichmäßig auf die beiden Auslässe des Kaffeeautomatens aufzuteilen. Bei bisher aus dem Stand der Technik bekannten Kaffeeautomaten wurde eine Milchschaumdüse, das heißt ein Auslass für Milch bzw. Milchschaum, üblicherweise an einem Extraplatz am Kaffeeautomaten angeordnet, wobei dann eine Tasse, beispielsweise zum Herstellen von Cappuccino, während des Zubereitungsvorganges umgestellt werden musste. Einige Kaffeeautomaten haben Milchschaumdüsen auch direkt neben oder am Kaffeeauslauf, wobei üblicherweise lediglich eine Tasse mit Kaffee und gleichzeitig Milchschaum befüllt werden kann, während ein gemeinsames, das heißt gleichzeitiges, Befüllen von zwei separaten Tassen problematisch ist. Mit der erfindungsgemäßen Kanalgabel ist es möglich, mit lediglich einem Milch-/Milchschaumzuführkanal zwei separat, das heißt beabstandet zueinander, angeordnete Auslässe zu beliefern, wodurch sowohl das Befüllen eines einzigen Getränkebehälters als auch das gleichzeitige Befüllen zweier separater Getränkebehälter problemlos möglich ist. Die erfindungsgemäße Kanalgabel kann dabei beispielsweise aus Kunststoff ausgebildet sein und lässt sich daher kostengünstig und in nahezu beliebiger Ausgestaltung herstellen. Von besonderem Vorteil ist dabei, dass keine zwei separaten Milch-/Milchschaumzuführkanäle vorgesehen werden müssen, was aufgrund des äußerst geringen Bauraumangebots im Bereich der Auslässe stets zu Schwierigkeiten führen würde. Generell ist dabei auch denkbar, dass nicht zwei separate Kaffeezuführkanäle vorgesehen sind, sondern lediglich ein-einziger, der eng benachbart zum Milch-/Milchschaumzuführkanal angeordnet ist, und der über dieselbe Kanalgabel wahlweise einen oder zwei separate Getränkebehälter befüllt. Vorzugsweise sind jedoch zwei separate Kaffeezuführkanäle und lediglich ein einziger, beide Auslässe gleichzeitig versorgender, Milch/Milchschaumzuführkanal vorgesehen.

Bei einer vorteilhaften Weiterbildung der erfindungsgemäßen Lösung, ist die Kanalgabel abnehmbar ausgebildet. Eine leichte Abnehmbarkeit der Kanalgabel ermöglicht eine vereinfachte und dadurch hygienische Reinigung derselben, wodurch ein besonders einfaches Handling erreicht werden kann. Selbstverständlich ist dabei die Kanalgabel vorzugsweise spülmaschinenfest ausgebildet, so dass diese alternativ händisch oder eben in einer Spülmaschine gereinigt werden kann. Ein Anbau der Kanalgabel am Kaffeeautomat kann dabei über eine einfache Steck- oder Rastverbindung erfolgen, so dass ein An- bzw. Abbau der Kanalgabel an den Kaffeeautomaten bzw. von demselben auch für Laien problemlos möglich ist.

Bei einer vorteilhaften Weiterbildung der erfindungsgemäßen Lösung, bilden zumindest zwei Endbereiche der beiden Kaffeezuführkanäle und die Kanalgabel eine gemeinsam entnehmbare Einheit. Eine derart gemeinsam entnehmbare Einheit erlaubt ein besonders einfaches Reinigen sowohl der Kanalgabel als auch entsprechender Bereiche der Kaffeezuführkanäle, wodurch das Handling bei Reinigungsvorgängen zusätzlich erleichtert werden kann. Auch diese entnehmbare Einheit ist dabei wieder vorzugsweise spülmaschinenfest ausgebildet, so dass diese wiederum alternativ händisch oder mittels einer Spülmaschine gereinigt werden kann.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

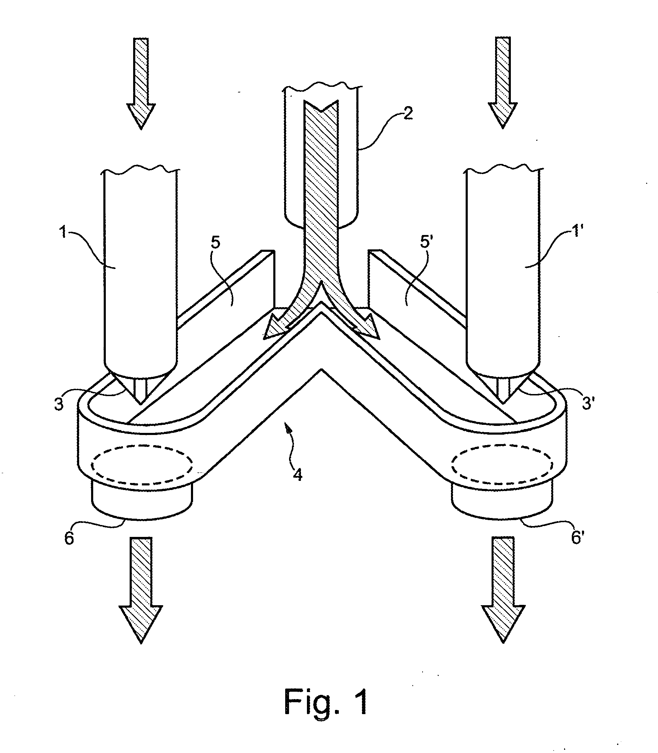

Die einzige Fig. 1 zeigt eine erfindungsgemäße Kanalgabel.

Entsprechend der Fig. 1, weist ein lediglich in seinem Getränkeauslassbereich dargestellter Kaffeeautomat zwei Kaffeezuführkanäle 1 und 1' sowie einen Milch-/Milchschaumzuführkanal 2 auf. In dem Milch-/Milchschaumzuführkanal 2 kann wahlweise Milch oder Milchschaum einem herzustellenden Getränk, beispielsweise einem Cappuccino, zugeführt werden. Die beiden Kaffeezuführkanäle 1 und 1' weisen dabei einen Abstand zueinander auf, der so gewählt ist, dass alternativ ein gemeinsames Befüllen von zwei separaten Getränkebehältern oder lediglich einem einzigen Getränkebehälter möglich ist. Der Abstand der beiden Kaffeezuführkanäle 1,1' bzw. deren Kanalauslässe 3 und 3' zueinander ist somit üblicherweise kleiner als ein Durchmesser einer gewöhnlichen Tasse, wodurch diese simultan durch beide Kanalauslässe 3,3' befüllt werden kann.

Erfindungsgemäß ist nun zusätzlich eine Kanalgabel 4 vorgesehen, die einen aus dem Milch-/Milchschaumzuführkanal 2 austretenden Fluidstrom in Richtung der beiden Kanalauslässe 3, 3' der Kaffeezuführkanäle 1, 1' leitet. Die Kanalgabel 4 weist dabei zwei Teilkanäle 5 und 5' auf, die gemeinsam beginnend beim Milch-/Milchschaumkanal 2 zum jeweiligen Kanalauslass 3, 3' führen. An ihrem jeweils freien Ende, weisen die beiden Teilkanäle 5, 5' jeweils eine Auslassöffnung 6, 6' auf, durch welche die Milch bzw. der Milchschaum aus dem Milch-/Milchschaumzuführkanal 2 über die entsprechenden Teilkanäle 5, 5' der Kanalgabel in die oder den darunter angeordneten Getränkebehälter austreten kann. Mit der erfindungsgemäßen Kanalgabel 4 ist es somit möglich, mit lediglich einem einzigen Milch-/Milchschaumzuführkanal 2 zwei Milch/Milchschaumteilströme zu erzeugen und dadurch beispielsweise zwei separate Cappuccino-Getränke gleichzeitig zuzubereiten. Die Kanalgabel 4 ist dabei im Schnittpunkt der beiden Teilkanäle 5, 5' offen ausgeführt, wobei auch denkbar ist, dass die Kanalgabel 4 in diesem Bereich geschlossen ausgeführt ist, so dass ein unerwünschtes Austreten von aus dem Milch-/Milchschaumzuführkanal 2 austretender Milch bzw. Milchschaum zuverlässig unterbunden wird.

Betrachtet man die Fig. 1, so kann man erkennen, dass die beiden Auslassöffnungen 6 und 6' im Wesentlichen fluchtend-zum-jeweiligen-Kanalauslass 3, 3' des darüber angeordneten Kaffeezuführkanals 1,1' angeordnet sind, so dass durch die Auslassöffnungen 6, 6' sowohl Milch, als auch Milchschaum bzw. Kaffee in den oder die darunter angeordnete Getränkebehälter einfüllbar ist. Die Auslassöffnungen 6, 6' der Kanalgabel 4 sind dabei beabstandet zu den jeweils zugehörigen Kanalauslässen 3, 3' der beiden Kaffeezuführkanäle 1,1' angeordnet, so dass sich die Kanalgabel 4 und die Kaffeezuführkanäle 1,1' nicht berühren. Vorzugsweise sind dabei die Auslassöffnungen 6, 6' direkt fluchtend zu den Kanalauslässen 3, 3' der zugehörigen Kaffeezuführkanäle 1, 1' angeordnet.

Erfindungsgemäß ist die Kanalgabel 4 des Weiteren abnehmbar ausgebildet, so dass diese zu Reinigungszwecken einfach vom Kaffeeautomaten abgebaut und genauso einfach wieder angebaut werden kann. Denkbar ist hierbei auch, dass zumindest die Endbereiche der beiden Kaffeezuführkanäle 1,1', das heißt insbesondere die den jeweiligen-Kanalauslass 3, 3'tragenden Bereiche zusammen mit der Kanalgabel 4 eine gemeinsam entnehmbare Einheit bilden, so dass beim Abnehmen dieser Einheit nicht nur die Kanalgabel 4, sondern zugleich auch zumindest schmutzgefährdete Bereiche der Kaffeezuführkanäle 1,1' einfach gereinigt werden können. Die Kanalgabel 4 ist dabei vorzugsweise aus Kunststoff ausgebildet und insbesondere spülmaschinenfest, so dass diese nicht aufwändig händisch gereinigt werden muss, sondern einfach mittels einer herkömmlichen Spülmaschine gereinigt werden kann.

Mit der erfindungsgemäßen Kanalgabel 4 kann der Getränkebehälter, beispielsweise eine Tasse, deutlich einfacher und genauer unterhalb der Auslassöffnungen 6, 6' positioniert werden, wobei insbesondere das gleichzeitige Befüllen von zwei separaten Getränkebehältern deutlich vereinfacht wird. Durch die entnehmbare Ausbildung zumindest der Kanalgabel 4, lässt sich auch eine einfache und hygienische Reinigung derselben gewährleisten, wodurch eine nicht unerhebliche Komfortsteigerung erreicht werden kann.

### Bezugszeichenliste

- 1: Kaffeezuführkanal
- 2: Milch-/Milchschaumzuführkanal
- 3: Kanalauslass
- 4: Kanalgabel
- 5: Teilkanal
- 6: Auslassöffnung

## Patentansprüche

1. Kaffeeautomat zur Ausgabe von Kaffee, Milch und/oder Milchschaum,
- mit zumindest einem Kaffeezuführkanal (1) und einem Milch/Milchschaumzuführkanal (2),
- mit zwei zueinander beabstandet angeordneten Kanalauslässen (3,3'), wobei der Abstand zwischen den beiden Kanalauslässen (3,3') so gewählt ist, dass alternativ ein gemeinsames Befüllen von zwei Getränkebehältern oder lediglich einem einzigen Getränkebehälter möglich ist,
**dadurch gekennzeichnet,**
- **dass** zwei Kaffeezuführkanäle (1,1') vorgesehen sind, die jeweils einem der beiden Kanalauslässe (3,3') zugeordnet sind,
- **dass** eine Kanalgabel (4) mit zwei Teilkanälen (5,5') vorgesehen ist, die den Milch-/Milchschaumzuführkanal (2) mit den beiden Kanalauslässen (3,3') kommunizierend verbindet.

2. Kaffeeautomat nach Anspruch 1,
**dadurch gekennzeichnet,**
**dass** die Kanalgabel (4) abnehmbar ausgebildet ist.

3. Kaffeeautomat nach Anspruch 1 oder 2,
**dadurch gekennzeichnet,**
**dass** die Kanalgabel (4) zwei Teilkanäle (5,5') aufweist, die in deren Schnittpunkt kommunizierend mit dem Milch-/Milchschaumzuführkanal (2) verbunden sind.

4. Kaffeeautomat nach Anspruch 3,
**dadurch gekennzeichnet,**
**dass** die beiden Teilkanäle (5,5') an ihrem freien Ende jeweils eine Auslassöffnung (6,6') aufweisen, durch welche die Milch bzw. der Milchschaum in den Getränkebehälter austreten kann.

5. Kaffeeautomat nach Anspruch 4,
**dadurch gekennzeichnet,**
**dass** die Auslassöffnungen (6,6') der beiden Teilkanäle (5,5') jeweils im Wesentlichen fluchtend zum Kanalauslass (3,3') eines zugehörigen Kaffeezuführkanals (1,1') angeordnet sind, so dass durch die Auslassöffnungen (6,6') auch Kaffee in den Getränkebehälter einfüllbar ist.

6. Kaffeeautomat nach Anspruch 5,
**dadurch gekennzeichnet,**
**dass** die Auslassöffnungen (6,6') der Kanalgabel (4) beabstandet zu den, vorzugsweise unterhalb der, jeweils zugehörigen Kanalauslässe (3,3') der beiden Kaffeezuführkanäle (1,1') angeordnet sind, so dass sich die Kanalgabel (4) und die Kaffeezuführkanäle (1,1') nicht berühren.

7. Kaffeeautomat nach einem der Ansprüche 1 bis 6,
**dadurch gekennzeichnet,**
**dass** zumindest Endbereiche der beiden Kaffeezuführkanäle (1,1') und die Kanalgabel (4) eine gemeinsam entnehmbare Einheit bilden.

8. Kaffeeautomat nach Anspruch 7,
**dadurch gekennzeichnet,**
**dass** die Einheit oder zumindest die Kanalgabel (4) spülmaschinenfest ausgebildet sind.

## Claims

1. Coffee machine for dispensing coffee, milk and/or milk foam,
- with at least one coffee feed channel (1) and a milk/milk-foam feed channel (2),
- with two channel outlets (3, 3') arranged at a spacing from one another, wherein the spacing between the two channel outlets (3, 3') is so selected that alternatively a common filling of two beverage containers or merely a single beverage container is possible,
**characterised in that**
- two coffee feed channels (1, 1') are provided, which are each associated with a respective one of the two channel outlets (3, 3'), and
- a channel fork (4) with two part channels (5, 5') is provided and provides communicating connection of the milk/milk-foam feed channel (2) with the two channel outlets (3, 3').

2. Coffee machine according to claim 1, **characterised in that** the channel fork (4) is constructed to be removable.

3. Coffee machine according to claim 1 or 2, **characterised in that** the channel fork (4) comprises two part channels (5, 5') which have at the intersection point thereof communicating connection with the milk/milk-foam feed channel (2).

4. Coffee machine according to claim 3, **characterised in that** the two part channels (5, 5') each have at the free end thereof a respective outlet opening (6, 6') through which the milk or the milk foam can issue into the beverage container.

5. Coffee machine according to claim 4, **characterised in that** the outlet openings (6, 6') of the two part channels (5, 5') are each arranged substantially in alignment with the channel outlet (3, 3') of an associated coffee feed channel (1, 1') so that coffee is also fillable into the beverage container via the outlet openings (6, 6').

6. Coffee machine according to claim 5, **characterised in that** the outlet openings (6, 6') of the channel fork (4) are arranged at a spacing from, preferably below, the respectively associated channel outlets (3, 3') of the two coffee feed channels (1, 1') so that the channel fork (4) and the coffee feed channels (1, 1') are not in contact.

7. Coffee machine according to any one of claims 1 to 6, **characterised in that** at least end regions of the two coffee feed channels (1, 1') and the channel fork (4) form a common, removable unit.

8. Coffee machine according to claim 7, **characterised in that** the unit or at least the channel fork (4) is of washing-machine-proof construction.

## Revendications

1. Automate à café pour la délivrance de café, de lait et/ou de mousse de lait, comprenant
- au moins un canal d'arrivée de café (1) et un canal d'arrivée de lait/mousse de lait (2),
- deux sorties de canal (3, 3') disposées à distance l'une de l'autre, la distance entre les deux sorties de canal (3, 3') étant choisie de telle sorte qu'on peut avoir en alternative un remplissage commun de deux récipients de boisson ou seulement un unique récipient de boisson,
**caractérisé**
- **en ce que** deux canaux d'arrivée de café (1, 1') sont prévus, lesquels sont attribués chacun à l'une des deux sorties de canal (3, 3'),
- **en ce qu'**une fourche de canal (4) avec deux canaux partiels (5, 5') est prévue, laquelle relie en communication le canal d'arrivée de lait/mousse de lait (2) avec les deux sorties de canal (3, 3').

2. Automate à café selon la revendication 1,
**caractérisé**
**en ce que** la fourche de canal (4) est conçue de façon amovible.

3. Automate à café selon la revendication 1 ou 2,
**caractérisé**
**en ce que** la fourche de canal (4) présente deux canaux partiels (5, 5'), qui sont reliés en leur point d'intersection en communiquant avec le canal d'arrivée de lait/mousse de lait (2).

4. Automate à café selon la revendication 3,
**caractérisé**
**en ce que** les deux canaux partiels (5, 5') présentent sur leur extrémité libre à chaque fois une ouverture de sortie (6, 6'), par laquelle le lait ou la mousse de lait peut sortir dans le récipient pour boissons.

5. Automate à café selon la revendication 4,
**caractérisé**
**en ce que** les ouvertures de sortie (6, 6') des deux canaux partiels (5, 5') sont disposées à chaque fois sensiblement en alignement avec le canal de sortie (3, 3') d'un canal d'arrivée de café (1, 1') spécifique, de sorte que du café peut être versé également par les ouvertures de sortie (6, 6') dans le récipient pour boissons.

6. Automate à café selon la revendication 5,
**caractérisé**
**en ce que** les ouvertures de sortie (6, 6') de la fourche de canal (4) sont disposées à distance, de préférence au-dessous, des sorties de canal (3, 3') respectivement spécifiques des deux canaux d'arrivée de café (1, 1'), de sorte que la fourche de canal (4) et les canaux d'arrivée de café (1, 1') ne se touchent pas.

7. Automate à café selon l'une quelconque des revendications 1 à 6,
**caractérisé**
**en ce qu'**au moins des zones d'extrémité des deux canaux d'arrivée de café (1, 1') et la fourche de canal (4) forment une unité pouvant être enlevée en commun.

8. Automate à café selon la revendication 7,
**caractérisé**
**en ce que** l'unité ou du moins la fourche de canal (4) sont conçues de façon résistante au lave-vaisselle.
